(19)

Europäisches Patentamt

European Patent Office

Office européen des brevets

(11) **EP 3 820 040 A1**

(12) **EUROPEAN PATENT APPLICATION**

(43) Date of publication:
**12.05.2021 Bulletin 2021/19**

(21) Application number: **19208333.5**

(22) Date of filing: **11.11.2019**

(51) Int Cl.:
**H02M 7/483** $^{(2007.01)}$     **H02M 3/158** $^{(2006.01)}$

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **ABB Schweiz AG
5400 Baden (CH)**

(72) Inventors:
• **ABDELHAKIM, Ahmed
724 65 Västerås (SE)**
• **DIJKHUIZEN, Frans
726 31 Skultuna (SE)**

(74) Representative: **Kransell & Wennborg KB
P.O. Box 27834
115 93 Stockholm (SE)**

(54) **MULTIPHASE CURRENT-FED MODULAR MULTILEVEL CONVERTER**

(57)     A multiphase current-fed modular multilevel converter, CMMC, is presented. The CMMC comprises a plurality of cascaded submodules, SMs, (57) connected in series between ground point and an alternating current, AC, voltage output point (V), wherein each SM comprises a connectable series capacitor ($C_1$, $C_2$, $C_n$), a blocking diode (D) connected between an input direct current, DC, source point ($i_{dc}$) and the AC voltage output point, wherein each phase of the multiphase CMMC comprises an arm of the plurality of cascaded SMs (57) and the blocking diode (D), and an input DC source (50, 51) connected between ground and the input DC source point. An output AC voltage ($V_a$, $V_b$, $V_c$) is drawn differentially between two of the arms.

Fig. 4

**(Cont. next page)**

EP 3 820 040 A1

Fig. 5

**Description**

**TECHNICAL FIELD**

The present disclosure relates to a multiphase current-fed modular multilevel converter.

**BACKGROUND**

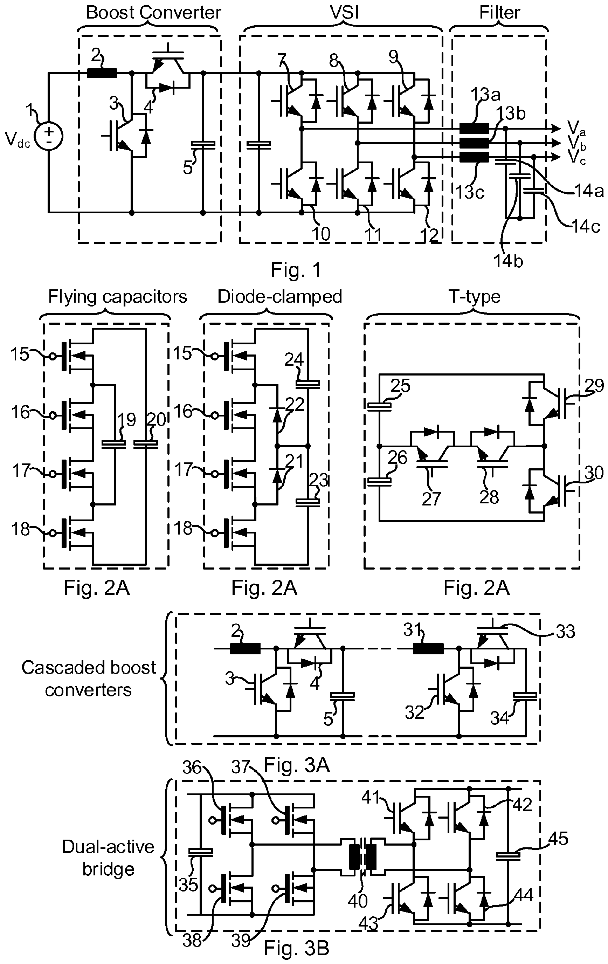

Different applications related to dc-ac conversion, such as motor drives and grid connected applications including UPS systems, can be fed by fuel-cells, photovoltaic (PV) panels, batteries or other low-voltage (LV) dc source. Quite often LV dc input is not sufficient to meet the ac side requirements. Therefore, a step-up converter is used for regulating and boosting the LV dc input voltage as depicted in Fig. 1. In many cases, high-voltage gain converters, such as voltage multiplier or isolated solutions, are used that highly affects the efficiency of the entire system conversion system. This is particularly true for fuel-cell applications, as the output voltage is very low. Fig. 1 illustrates a LV dc source 1 connected to a voltage source inverter (VSI) via a boost converter (BC). The VSI is in turn connected to output ac $V_a$, $V_b$, $V_c$ via a filter. The voltage source with a voltage $V_{DC}$, is connected to the DC/DC BC. The BC comprises an inductor 2 connected to the voltage source 1 and to MOSFET 4 connected to the VSI as well as to a capacitor 5. The inductor 2 is further connected to MOSFET 3. The VSI comprises a capacitor 6, arranged in parallel with the capacitor 5 of the BC, and MOSFETs 7-12 arranged to provide the output voltages $V_a$-$V_c$. The filter comprises an inductor $13_a$-$13_c$ per phase, and a capacitor $14_a$-$14_c$ connected between each phase.

On the other hand, the inversion stage typically uses high-voltage rating semiconductor devices, MOSFETs or IGBTs, depending on the voltage and the power levels of the targeted application. Such utilization of high-voltage semiconductor devices leads to significant switching and conduction losses, resulting in a deteriorated system efficiency. Hence, having a reliable, modular, compact, redundant, and efficient power conversion system is always a common challenge in the prior mentioned applications.

In the recent years, modular multilevel converters (MMCs) have been demonstrated as a reliable, redundant, and efficient solution for numerous applications, such as high-voltage DC (HVDC), flexible AC transmission system (FACTS), motor drive systems, and PV applications. Such MMCs are however not directly applicable for LV systems utilizing LV MOSFETs for improved system efficiency and redundancy.

**SUMMARY**

One objective is to provide an efficient current-fed modular multilevel converter (CMMC) system suitable for low voltage systems.

According to an aspect a multiphase CMMC is presented. The multiphase CMMC comprises a plurality of cascaded submodules (SMs) connected in series between ground point and an alternating current (AC) voltage output point, wherein each SM comprises a connectable series capacitor, a blocking diode connected between an input direct current (DC) source point and the AC voltage output point, wherein each phase of the multiphase CMMC comprises an arm of the plurality of cascaded SMs and the blocking diode, and an input DC source connected between ground and the input DC source point. An output AC voltage is drawn differentially between two of the arms.

The multiphase CMMC may comprise three phases of a three-phase system.

Each SM may comprise a lower and an upper switch configured to be sinusoidal modulated in a complementary manner.

By the presented CMMC enabling of a high modulation index is achieved. Further advantages with the presented CMMC are flexible boosting capability with possibility of high-voltage gains, multilevel operation, reduced cost with utilization of low-cost and LV MOSFETs and LV electrolytic capacitors, high efficiency with low-ON-state resistance of LV MOSFETs, enabling of filter inductor with minimal requirements, enabling possibility of using redundant cells, enabling use as a multiport converter interfacing an additional dc source, enabling further improved efficiency by replacing the blocking diodes with MOSFETs operating in synchronous rectification mode, enabling higher voltage gains with more SMs per arm.

Generally, all terms used in the claims are to be interpreted according to their ordinary meaning in the technical field, unless explicitly defined otherwise herein. All references to "a/an/the element, apparatus, component, means, step, etc." are to be interpreted openly as referring to at least one instance of the element, apparatus, component, means, step, etc., unless explicitly stated otherwise. The steps of any method disclosed herein do not have to be performed in the exact order disclosed, unless explicitly stated.

**BRIEF DESCRIPTION OF THE DRAWINGS**

Aspects and embodiments are now described, by way of example, with reference to the accompanying drawings, in which:

Fig. 1 is a diagram schematically illustrating grid-tied low-voltage dc sources;

Figs. 2 are diagrams schematically illustrating alternative embodiments for two-level voltage source inverters (VSIs);

Figs. 3 are diagrams schematically illustrating alternative high-voltage gain dc-dc converters for boost converters;

Fig. 4 is a diagram schematically illustrating a current-fed modular multilevel converter (CMMC); and

Fig. 5 is a diagram schematically illustrating a high value of modulation achieved by a CMMC of Fig. 4.

## DETAILED DESCRIPTION

The aspects of the present disclosure will now be described more fully hereinafter with reference to the accompanying drawings, in which certain embodiments of the invention are shown.

These aspects may, however, be embodied in many different forms and should not be construed as limiting; rather, these embodiments are provided by way of example so that this disclosure will be thorough and complete, and to fully convey the scope of all aspects of invention to those skilled in the art. Like numbers refer to like elements throughout the description.

It is desirable to take energy from a single low-voltage (LV) dc input for ac output, and a multiphase current-fed modular multilevel converter (CMMC) is efficient also for LV applications. In other words, it is desirable to achieve a boosting capability within the inversion operation utilizing a modular structure. This allows the connection of a LV dc source to a much higher ac one, utilizing LV MOSFETs (e.g. 50-200 V) with reduced conduction losses, reduced voltage stresses across the different system components, and higher reliability through added redundancy.

Connecting LV dc sources to ac systems usually requires an additional step-up conversion stage as depicted in Fig. 1. Such additional stage brings extra complexity, conversion losses, and cost to the entire power conversion system. Furthermore, high-voltage IGBTs are mandatory to be used in most of the cases which introduces higher switching and conduction losses. In other words, the utilization of LV MOSFETs and benefiting from their low ON-state resistance is quite limited. Further, output filter requirements are quite challenging, and this filter significantly contributes to system volume and losses.

These issues can be slightly mitigated by replacing a conventional two-level voltage source inverter (VSI) with any of the state-of-the-art three-level options illustrated in Figs. 2A-2C. Under such options, MOSFETs can be utilized but in order to utilize LV MOSFETs (e.g. 50-200 V), higher number of levels can be utilized, and this is not practically possible at higher power levels due to the difficulty of minimizing the commutation loops in such topologies.

Fig. 2A illustrates flying capacitor switching, with four series-connected switches 15-18 with a first capacitor 19 connected between switches 15, 16 and 17, 18, and a second capacitor 20 connecting switches 15 and 18.

Fig. 2B illustrates diode-clamped switching, with four series-connected switches 15-18 with two series-connected capacitors 23 and 24 connecting switches 15 and 18. A first diode 21 is connected between switches 17-18 and capacitors 23, 24. A second diode 22 is connected between capacitors 23, 24 and switches 15, 16.

Fig. 2C illustrates T-type switching, with two series-connected switches 29 and 30 connecting two series-connected capacitors 25 and 26. Two further series-connected switches are connected between capacitors 25, 26 and switches 29, 30.

On the other hand, it is quite challenging for e.g. fuel-cell applications, in which very low output voltage exists (less than 150 V) and it is not straight forward to have series connections as in PV arrays or batteries. Thus, high step-up dc-dc converters, such as cascaded boost converters and dual-active bridges, which are shown in Fig. 3, are needed to be utilized, resulting in further complexity and losses.

Fig. 3A illustrates cascaded boost converter each comprising an inductor 2, 31 connected to a first switch 4, 33 in turn connected to a capacitor 5, 34. The inductor 2, 32 is also connected to a switch 3, 32.

Fig. 3B illustrates a dual-active bridge with first set of four switches 36-39 connected between a first conductor 35 and a first side of a transformer 40, which transformer 40 on its other side is connected to a second set of four switches 41-44 and a capacitor 45.

A convert solution is presented, wherein high boosting capability maintaining LV stress across different semiconductors is limited to cell voltage. Furthermore, higher conversion ratios can be obtained by adding more cells in series, which in turns increases the number of voltage levels and significantly reduces desired filtering. This converter can utilize low-cost LV MOSFETs (e.g. 50-200 V) and electrolytic capacitors.

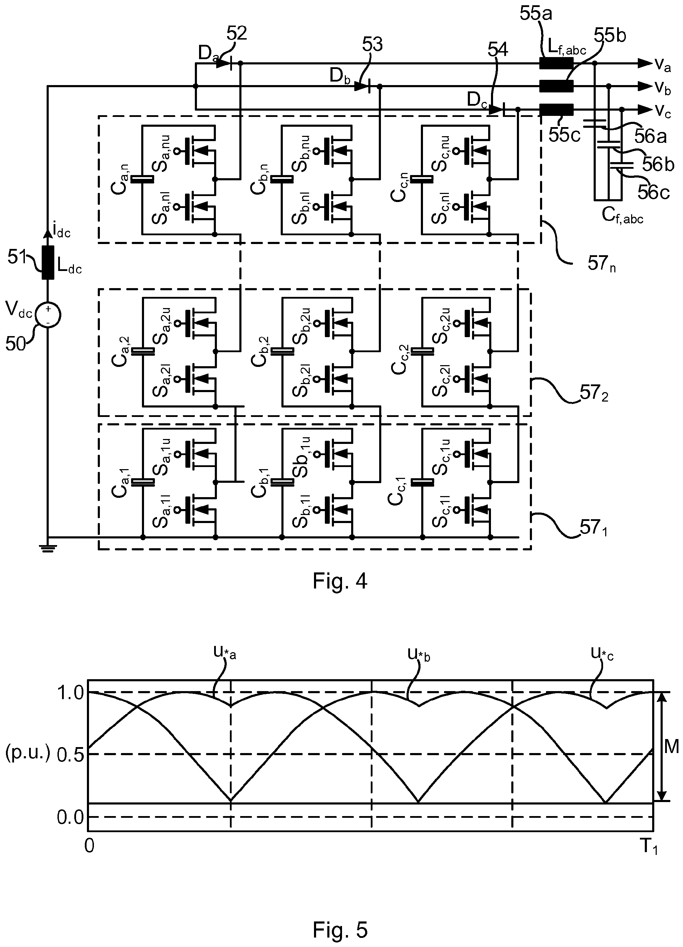

A multiphase CMMC utilizing cascaded submodules (SMs) is presented with reference to Fig. 4. A three-phase $V_a$, $V_b$, $V_c$ case with n SMs 57 per phase is illustrated. Each phase or arm comprises a series connection of SMs 57 1, 2, ..., n and a blocking diode D 52-54 per phase or arm, where for any SM m of phase x (x is a, b, or c), two switches ($S_{x,ml}$ and $S_{x,mu}$) and one capacitor ($C_{x,m}$) are utilized. A current source is illustrated with a voltage source 50 having a voltage $V_{dc}$ in series with an inductor 50 having an inductance $L_{dc}$, providing a current $i_{dc}$.

Each SM may comprise a capacitor C in parallel with two series connected switches $S_l$ and $S_u$. The lower switch $S_l$ is connected between ground and a phase, and $S_u$ is connected to the capacitor C and the phase. All first SMs of the three phases are illustrated as SMs $57_1$, all second SMs of the three phases are illustrated as SM $57_2$, and all n SMs of the three phases are illustrated as SM $57_n$. Each row of SMs 57 is connected in series to an adjacent row of SMs, or ground and phase respectively. Each phase Va, Vb, Vc may be connected to the current source via filtering, a series inductance 55a-55c per phase, having a respective inductance $L_{f,a-c}$, and a capacitor 56a-c between each phase, having a respective capacitance $C_{f,a-c}$.

With the multiphase CMMC illustrated in Fig. 4, during one switching cycle of time, energy transfer from the voltage dc-source 50 to the different SMs through $L_{dc}$ 51 can be shifted through capacitors of the SMs to provide a high modulation index.

The switches $S_{x,mu}$ and $S_{x,ml}$ may e.g. by LV MOSFETs, MOSFETs or IGBTs, and may be sinusoidally modulated in a complementary manner. The anodes of the blocking diodes are then connected together to the dc input $V_{dc}$ through the inductor $L_{dc}$ as depicted in Fig. 4.

With e.g. four SMs per arm (i.e. n = 4), a phase shifted carrier-based modulation with a reference signal $v_x^*$ between 0 and 1/n = 0.25, corresponding to the lowest number of inserted SMs (varying between zero and one inserted SMs at a time) may be used. A phase shifted carrier-based modulation with a reference signal $v_x^*$ between 1/n = 0.25 and 2/n = 0.5, corresponding to the lowest number of inserted SMs (varying between one and two inserted SMs at a time) may alternatively be used.

CMMC Operation

Considering the three-phase CMMC shown in Fig. 4, each arm is acting as an independent voltage source with a common ground at one side, while the ac output is obtained differentially between the arms. The energy is transferred from the dc source 50 to the SM capacitors $C_x$ of each arm during one-third of the fundamental cycle, under which the arm voltage is the lowest, i.e. when this arm has the lowest inserted number of SMs.

For a CMMC operation wherein between zero and one SMs are inserted at a time, each switching cycle is divided into a number of intervals equal to the number of SMs, e.g. n = 4, and the energy is stored in the inductor $L_{dc}$ during a part of each interval and then transferred to inserted SM capacitor in the other part of this interval. Under each interval, one SM capacitor per phase is charged.

For a CMMC operation wherein between one and two SMs are inserted at a time, each switching cycle is divided into a number of intervals equal to half the number of SMs, and the energy is stored in the inductor $L_{dc}$ during a part of each interval and then transferred to inserted SM capacitor in the other part of this interval. Under each interval, two SM capacitors per phase are charged.

CMMC Modulation

In order to achieve the presented CMMC operation, a modified space vector modulation (MSVM), whose reference signals $v^*_x$ are as depicted in Fig. 5 considering one fundamental cycle $T_1$ vs per unit (p.u.) may be used. The CMMC modulation may be used with n phase-shifted carriers in order to modulate n SMs per arm, and a three-phase system is illustrated in Fig. 5.

By use of the CMMC modulation a constant duty cycle for the dc-side boosting operation can be achieved. The CMMC may have a high value of the modulation index M in order to have lower distortion in the output voltage. The mathematical derivation of this converter can be driven and the average SM capacitor voltage ($\bar{v}_c$) can be related to the dc-source voltage ($V_{dc}$) by

$$\bar{v}_C = \frac{V_{dc}}{n(1-M)}$$

where n is the number of SMs per arm and M is the modulation index defined in Fig. 5.

The output fundamental peak phase voltage ($\hat{v}_\varphi$) as a function of the dc-source voltage ($V_{dc}$) is given by

$$\hat{v}_\varphi = \frac{MV_{dc}}{\sqrt{3}(1-M)}$$

The aspects of the present disclosure have mainly been described above with reference to a few embodiments and examples thereof. However, as is readily appreciated by a person skilled in the art, other embodiments than the ones disclosed above are equally possible within the scope of the invention, as defined by the appended patent claims.

**Claims**

1. A multiphase current-fed modular multilevel converter, CMMC, comprising:

   - a plurality of cascaded submodules, SMs, (57) connected in series between ground point and an alternating current, AC, voltage output point (V), wherein each SM comprises a connectable series capacitor ($C_1$, $C_2$, $C_n$);
   - a blocking diode (D) connected between an input direct current, DC, source point ($i_{dc}$) and the AC voltage output point, wherein each phase of the multiphase CMMC comprises an arm of the plurality of cascaded SMs (57) and the blocking diode (D); and
   - an input DC source (50, 51) connected between ground and the input DC source point;

   wherein an output AC voltage ($V_a$, $V_b$, $V_c$) is drawn differentially between two of the arms.

2. The multiphase CMMC as claimed in claim 1, comprising three phases of a three-phase system.

3. The multiphase CMMC as claimed in claim 1 or 2, wherein each SM comprises a lower and an upper switch ($S_l$, $S_u$) configured to be sinusoidal modulated in a complementary manner.

Fig. 1

Fig. 2A          Fig. 2A          Fig. 2A

Fig. 3A

Fig. 3B

Fig. 4

Fig. 5

Europäisches
Patentamt

European
Patent Office

Office européen
des brevets

# EUROPEAN SEARCH REPORT

**Application Number**

EP 19 20 8333

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | DE 10 2016 224569 A1 (CONTINENTAL AUTOMOTIVE GMBH [DE]) 14 June 2018 (2018-06-14) * abstract * * paragraph [0041]; figures 1, 2 * ----- | 1-3 | INV. H02M7/483 H02M3/158 |
| Y | EP 2 443 729 A1 (ALSTOM GRID UK LTD [GB]) 25 April 2012 (2012-04-25) * abstract * * paragraphs [0034], [0040] - [0044]; figures 1-4 * ----- | 1-3 | |
| Y | RIBEIRO H ET AL: "Single-stage DC-AC converter for photovoltaic systems", ENERGY CONVERSION CONGRESS AND EXPOSITION (ECCE), 2010 IEEE, IEEE, PISCATAWAY, NJ, USA, 12 September 2010 (2010-09-12), pages 604-610, XP031787172, ISBN: 978-1-4244-5286-6 * abstract; figure 2 * ----- | 1-3 | |
| Y | US 4 354 223 A (TURNBULL FRED G) 12 October 1982 (1982-10-12) * abstract; figures 1-8 * ----- | 1-3 | TECHNICAL FIELDS SEARCHED (IPC) H02M |
| Y | WO 2019/147144 A1 (RIAR BALJIT SINGH [NZ]; THRIMAWITHANA DULEEPA JAYANATH [NZ] ET AL.) 1 August 2019 (2019-08-01) * abstract; figures 2-4 * ----- | 1-3 | |
| Y | WO 2011/060812 A1 (AREVA T & D UK LTD [GB]; DAVIDSON COLIN [GB] ET AL.) 26 May 2011 (2011-05-26) * abstract; figure 6 * ----- | 1-3 | |
| Y | EP 2 797 216 A1 (ALSTOM TECHNOLOGY LTD [CH]) 29 October 2014 (2014-10-29) * abstract; figure 1 * ----- | 1-3 | |

The present search report has been drawn up for all claims

| Place of search | Date of completion of the search | Examiner |
|---|---|---|
| The Hague | 1 April 2020 | Van der Meer, Paul |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

......................................................................

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 19 20 8333

This annex lists the patent family members relating to the patent documents cited in the above-mentioned European search report.
The members are as contained in the European Patent Office EDP file on
The European Patent Office is in no way liable for these particulars which are merely given for the purpose of information.

01-04-2020

| Patent document cited in search report | Publication date | Patent family member(s) | Publication date |
|---|---|---|---|
| DE 102016224569 A1 | 14-06-2018 | NONE | |
| EP 2443729 A1 | 25-04-2012 | CA 2764504 A1<br>CN 102804571 A<br>EP 2443729 A1<br>KR 20140075554 A<br>US 2013119970 A1<br>WO 2010145690 A1 | 23-12-2010<br>28-11-2012<br>25-04-2012<br>19-06-2014<br>16-05-2013<br>23-12-2010 |
| US 4354223 A | 12-10-1982 | NONE | |
| WO 2019147144 A1 | 01-08-2019 | NONE | |
| WO 2011060812 A1 | 26-05-2011 | NONE | |
| EP 2797216 A1 | 29-10-2014 | CA 2910047 A1<br>CN 105340165 A<br>EP 2797216 A1<br>US 2016105109 A1<br>WO 2014173606 A1 | 30-10-2014<br>17-02-2016<br>29-10-2014<br>14-04-2016<br>30-10-2014 |

EPO FORM P0459

For more details about this annex : see Official Journal of the European Patent Office, No. 12/82